# EUROPEAN PATENT APPLICATION

(11) **EP 1 890 247 A2**
(43) Date of publication of application: **20.02.2008**
(21) Application number: 07020059.7
(22) Date of filing: 27.04.2001
(51) Int. Cl.: G06F 21/00

(54) **Method and terminal device for preventing unauthorized use of secured content files**

(30) Priority: 28.04.2000 US 561211
(62) Divisional of application: 01928137.7
(71) Applicant: Nokia Corporation, 02150 Espoo (FI)
(72) Inventor: Rahnasto, Ilkka, J., 01450 Vantaa (FI)
(74) Representative: Becker Kurig Straus

(57) **Abstract**

A method and terminal device are provided for authorizing use or denying use of a content file. An identification code may be assigned to the content file and a distributor code of a specific distributor may be assigned and attached to the content file. The terminal device may obtain a key code and compare the key code with a combination of the identification code and the distributor code to determine whether the terminal device is authorized to use the content file.

## Description

### TECHNICAL FILED

The present invention generally relates to a method and apparatus for preventing the unauthorized use of secured content files.

### Background Art

It is extremely desirable to prevent the mass distribution of content files protected by copyright (e.g. music, video, multimedia, databases, electronic books and publications) without the authorization of the copyright owner. The copyright laws around the world grant an exclusive right for the copyright owner to distribute and to communicate their works to the public, e.g. by making the copyrighted content available for downloading through the Internet. The distribution of files containing copyrighted content through networks and then making them available to endusers for downloading without proper authorization infringes the owner's copyright.

There are several initiatives to prevent the unauthorized use of copyrighted content files by using various encryption and water marking technologies. There are also standardization activities in the industry. The target of such standardization activities is to agree on uniform basic solutions to be used. Among the basic principles of such standardization are the freedom of the endusers to transfer the content file from his terminal device to another terminal device and the right to make a limited number of reproductions of the content file.

The content file may be coded in such a manner that its use on terminal equipment other than those authorized by the copyright holder would not be possible. The acceptance and success of these initiatives require that terminal device manufacturers and copyright owners agree on the identification methods used in the terminal devices. One central element in those technologies has been the assignment of identification codes specific to each terminal device.

U.S. Patent 5,956,048 discloses a method in which the device distributing the file contains a number of identification codes and each terminal has its own specific identification code. The device distributing the file to the terminal device does so only if the identification code of the terminal device is similar to one of the identification codes in the device distributing the content file. The weakness of this method is that it requires identification codes to be assigned to each terminal device and that the storing of identification codes to be assigned to each terminal device and that the storing of identification codes for all existing terminal devices is possible in all devices distributing content files. This method is not well-suited for open distribution systems between general purpose computers and/or communications terminals.

Another method is disclosed in the working papers of Content ID Forum ("CIDF") of 25 October, 1999 ("http://www.cidf.org"). This method is based on the idea of assigning a code to each content file. The remaining technical problem is to establish a method according to which the content file encoded by such identification code could be distributed to and used in general purpose terminal devices (e.g. computer terminals, mobile communication terminals, etc.) without limiting the use of the content file into specific equipment and without the necessity to assign identification codes specific to each terminal device.

Memory cards are also known in which content files can be downloaded. For this method, the content file is downloaded onto a separate memory card rather than from a network and into the terminal device. The memory card is then installed into a terminal device for playback and use of the content file in that terminal device.

There are various weaknesses in the existing technologies and especially in the use of identification codes specific for each terminal device. For the manufacturers and endusers of terminal devices, the most important weaknesses are the following:
(i) There will be potentially hundreds of millions of terminal devices on the marketplace and therefore the administration and control of identification numbers would be burdensome and would lack cost-effectiveness;
(ii) The copyright laws around the world allow some form of fair use, normally by entitling the user to copy the content file for use in another terminal device in his possession. Most proposed technologies and initiatives would potentially limit the use of the content file to the particular terminal device into which the content file was first downloaded or require a separate media (e.g. memory card, disk, etc.) to be used to enable the enduser to use the content file in another terminal device;
(iii) The existing technologies only indirectly focus on limiting the unauthorized distribution of copyrighted content even though the exclusive right for distribution is well-defined and established under copyright laws; and
(iv) The manufacturers of terminal devices would potentially need a license from copyright owners in order to sell and distribute terminal products enabling the use or playback of copyrighted content files even though their activities are not covered by copyright laws as such.

### DISCLOSURE OF THE INVENTION

The present invention provides a method and apparatus for authorizing use or denying use of a content file. This may include assigning an identification code to the content file and assigning a distributor code of a distributor to the content file. The terminal device may obtain a key code and also receive the identification code and the distributor code. The method and apparatus may compare the key code with the received identification code and the distributor code to determine whether the terminal device is authorized to use the content file.

The method and apparatus may also include authorizing use of the content file if the comparing determines that the key code corresponds with the combination of the identification code and the distributor code.

The method and apparatus may still further include denying use of the content file if the comparing determines that the key code fails to correspond with the combination of the identification code and the distributor code.

The content file may include a digitally formatted file.

The terminal device may include a wireless telecommunications unit and/or a computer system.

The identification code, the distributor code and/or the key code may be watermarked and/or encrypted prior to the terminal device receiving the code.

Still further, the terminal device may distinguish coded content files from non-coded content files. The content file may include a mechanism that does not allow the content file to be used by the terminal device unless the terminal device can distinguish coded content files from non-coded content files.
A third party, such as an administrator, may produce the key code based on a combination of the identification code and the distributor code.

The method may still further include determining whether the content file has been forwarded from the terminal device to another terminal device. The other terminal device may enable use of the content file without the key code if the content file is forwarded from a certain source or a wire connection of the terminal device. The another terminal device may be denied use of the content file without the key code if the content file is forwarded from an entity other than a certain source or a wire connection of the terminal device.

The present invention may avoid problems of the prior art as there is no need to assign identification codes to the terminal devices. The endusers may have the responsibility of acquiring the necessary authorizations in order to use a chosen content file. Additionally, the conditioning of use of the content file to the distributor code may effectively be used to control both unauthorized distribution of content files as well as the use and playback of such content files in equipment that are not compliant.

Other objects, advantages and salient features of the invention will become apparent from the following detailed description taken in conjunction with the annexed drawings, which disclose preferred embodiments of the invention.

### BRIEF DESCRIPTION OF THE DRAWINGS

The invention will be described with reference to the following drawings in which like reference numerals refer to like elements and wherein:
Figure 1 shows relationships of the owner, distributors, terminal devices and administrator according to the present invention;
Figure 2 shows a terminal device and content file according to the present invention; and
Figure 3 shows a flow chart showing the present invention.

### BEST MODE FOR CARRYING OUT THE INVENTION

The present invention prevents the use of secured content files in terminal devices if the content file has been acquired from an unauthorized source (i.e., an unauthorized distributor). This may prevent an unauthorized user from using a secured content file.

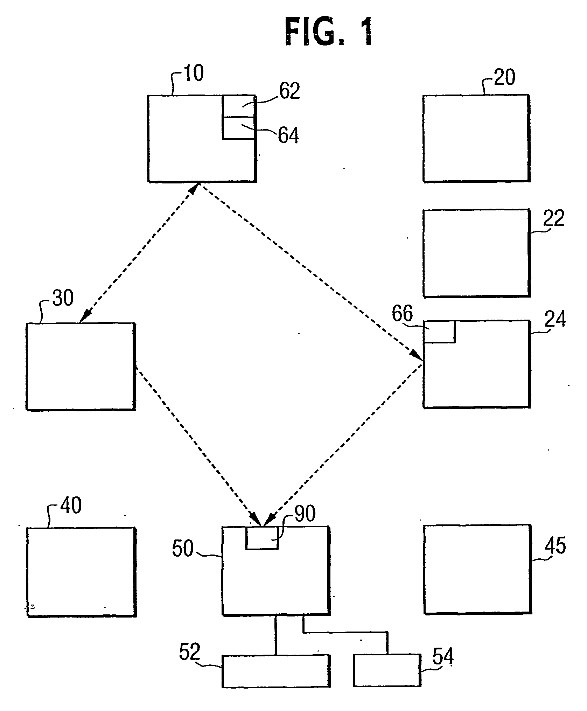

Figure 1 shows a relationship of a copyright owner 10, the distributors 20, 22 and 24, a copyright administrator 30 and the terminal devices 40, 50 and 60. This relationship is merely illustrative and is not meant to be limiting of the present invention. The terminal devices 40, 50 and 60 may include any equipment to receive content files including but not limited to computer terminals and mobile communication terminals. The owner 10 has a desire to give a content file 62 to a desired enduser, such as the terminal device 50. The content file 62 may be any type of file including but not limited to music, sound, written documents, etc. The owner 10 of the content file 62 attaches an identification code 64 to the content file 62. The owner 10 forwards the content file 62 and identification code 64 to a desired distributor. In the example shown in Figure1, the owner 10 selects the distributor 24 for distribution of the content file 62. The distributor 24 becomes an authorized distributor of the content file 62. The owner 10 may further provide a copy of the content file 62 to each of the distributors 20, 22 if he/she desires additional authorized distributors.

The terminal device 50 subsequently obtains the content file 62 from the distributor 24. In so doing, the distributor 24 attaches its distributor identification code 66 to the content file 62. The distribution code 66 is unique to the distributor 24. That is, the distributors 20 and 22 do not have the same distributor code 66 but rather have their own distributor codes (not shown in Fig. 1). In other words, the owner 10 (or other entity) may determine who distributed the content file 62 based on the distributor code that is attached to the content file 62. This ability to follow the distribution path is useful to ensure that the distributor was authorized and to show who is entitled to money payments. The terminal device 50 receives the content file 62, the identification code 64 and the distributor identification code 66.

The administrator 30, who preferably is a third party different than the distributor, provides a key code 90 to the terminal device 50. The terminal device 50 compares the key code 90 against the combination of the identification code 64 and the distributor code 66 that the terminal device 50 received. The key code 90 is preferably a combination of the identification code 64 and the distributor code 66. In other words, the administrator 30 provides a key code 90 that is unique to the specific content file and the specific distributor who is authorized to distribute the content file. Because the key code 90 is only provided to the terminal device 50, the terminal devices 40 and 60 will not have a key code that corresponds to the identification code 64 and the distributor code 66. These terminal devices 40 and 60 will be unable to use the content file without the proper key code.

The present invention involves three parameters, namely the identification code for the content file, the distributor code for a distributor authorized to distribute the content file and a key code that is formed as a combination of the identification code and the distributor code. The terminal device needs to have the key code that matches the identification code and the distributor code in order to properly receive and use the content file. The administrator may distribute several key codes each representing a different content file or a different distributor.

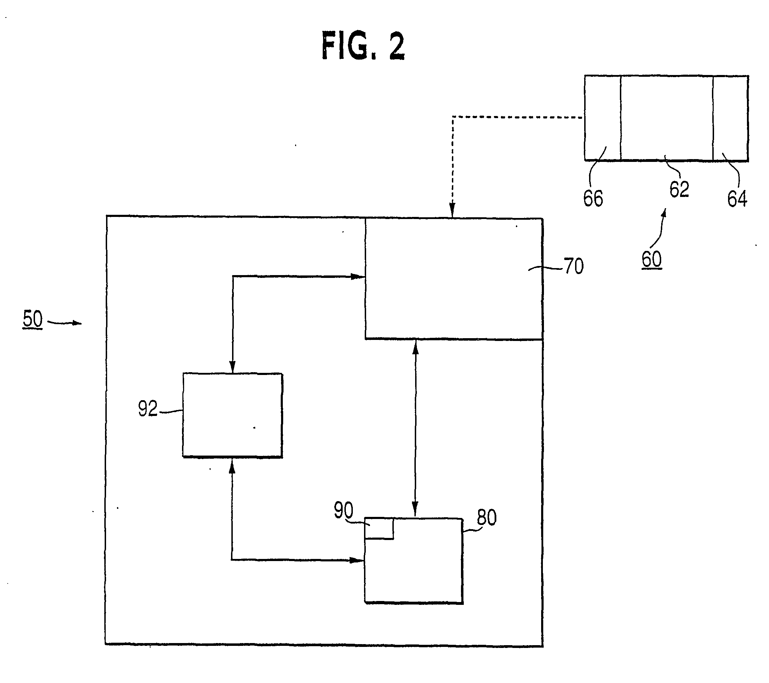

Figure 2 shows a block diagram of the terminal device 50 as well as the data 60 that may be received by the terminal device 50. While Figure 2 shows the terminal device 50, one skilled in the art would appreciate that each of the terminal devices 40 and 60 may be constructed in a similar manner. The data 60 may be a locally-stored medium such as a CD-ROM, a magnetic diskette, a tape, etc. or the data may be accessed through a network such as the Internet or the data 60 may be transmitted over a wireless telecommunication network and distributed to the terminal device 50. The data 60 preferably is a digitally encoded file that includes the content file 62, the identification code 64 and the distributor code 66. The identification code 64 and/or the distributor code 66 may be attached to the content file 62 or may be embedded within the content file 62. Further, the present invention may also forward the distributor code 66 and/or the identification code 64 to the terminal device (s) prior to (or subsequently to) sending the content file 62. This would allow the terminal device to run its comparison with the key code prior to (or subsequent to) actually receiving the content file 62.

The terminal device 50 preferably includes a connection device 70 adapted for receiving at least the data 60 and for possibly transmitting additional data across a network (i.e., the Internet), into a wireless telecommunication network or to a data storage medium. The communication device 70 may include an antenna system, a cable hookup port or any other type of electronic communication device. The terminal device 50 may also include a memory device 80 to store data including the key code 90 and possibly the identification code, the distributor code and the content file. The memory device 80 may be any type of temporary or permanent storage device. The memory device80 may further include any type of interconnections, latches, switches or buffers that may be used in addition to storing data. That is, the memory device may perform functions other than storing data such as routing data, latching data, performing calculations, etc.

The terminal device 50 may also include a comparing device 92 that compares the key code 90 with the received identification code and distributor code. This comparison is used to determine whether the terminal device may use the content file.

Figure 2 shows one embodiment of how the connecting device 70, the memory device 80 and the comparing device 92 may be all interconnected. One skilled in the art would understand that various methods and/or interconnections may be provided for communicating between these devices. Each of these methods and interconnections are within the scope of the present invention. The connecting device 70 preferably receives the key code 90 from the administrator 30. Again, this may be by the use of a locally-stored medium, across a network or over a wireless network. Either prior to, during or subsequent to receiving the key code 90, the connecting device 70 also receives at least portions of the data 60 which includes the distributor code 66 and the identification code 64 and preferably includes the content file 62. The codes may be temporarily stored in the memory device 80 or they may be immediately sent to the comparing device 92 for comparison. The terminal device 50 compares the key code 90 with the distributor code 66 and identification code 64. If the key code 90 corresponds (e. g., preferably is identical) to a combination of the distributor code 66 and the identification code 64, then the comparing device 92 signals the terminal device 50 that it is capable of receiving and using the content file 62. The content file 62 may then be appropriately stored or maintained in the memory device 80 for use by the terminal device 50. On the other hand, if the key code 90 does not correspond to a combination of the distributor code 66 and the identification code 64, then the comparing device 92 may signal the terminal device 50 that it is unable to store and use the content file 62. This may be appropriately indicated on a display apparatus (not shown) of the terminal device 50.

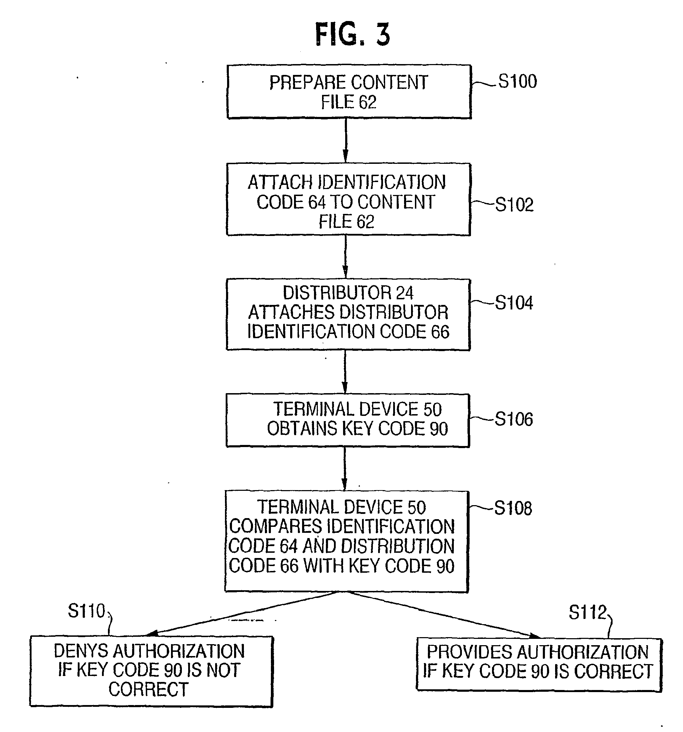

Figure 3 is a flow chart showing a preferred method according to the present invention. In this figure, the content file 62 is initially provided by the copyright owner 10 in step S100 and an identification code 64 is attached in step S 102. As discussed above, the content file 62 is preferably a digitally-formatted file that may be distributed with proper authorization. The content file 62 may be any type of data packet such as music, written documents, sounds, etc. In the preferred embodiment, each of the distributors 20, 22 and 24 is preferably assigned a unique distribution code to help the owner 10 determine who distributed the content file 62. In step S104, the distributor 24 attaches his distributor code 66 to the content file 62 and the identification code 64. The data 60 or portions of the data 60 are transmitted to the terminal device 50. In step S106, the terminal device 50 obtains a key code 90 preferably from an administrator 30. In step S108, the terminal device 50 compares the combination of the identification code 64 and the distributor code 66 with the key code 90. Based on that comparison, the terminal device 50 is denied use (step S110) of the content file 62 if the key code 90 does not correspond with the combination of the identification code 64 and the distributor code 66 or is authorized to use (step S 112) the content file 62 if the key code 90 properly corresponds with the combination of the identification code 64 and the distributor code 66. One skilled in the art would understand that the order of the steps shown in Figure 3 is merely illustrative and that the order is not limiting of the invention. That is, these steps may be performed in different orders provided that the key code 90 is compared with the identification code 64 and the distributor code 66.

One advantage of the present invention is that only the parties that have a direct interest in the copyright issues are involved. The owners 10 of the content file 62 are actively engaged in protecting their content files against copyright piracy. The distributors 20, 22 and 24 need authorization for their activities from the copyright owners 10. The present invention preferably limits the unauthorized mass distribution of content files.

The present invention also allows the enduser to use a content file not only in a specific terminal device but also in other devices in his possession. More specifically, once the terminal device 50 has received the content file 62 and is able to use the content file 62 because its key code 90 corresponds to the combination of the identification code 64 and the distributor code 66, then the terminal device 50 may forward the content file 62 to the device 52 or the device54, which are directly attached to the terminal device 50. However, the terminal device 50 may not be able to transfer the content file 62 to other terminal devices 40 and 60 because they are not authorized users. One way to accomplish this is by coding the content file 62 in such a manner that it cannot be downloaded and saved from an online source without the key code matching the combination of the identification code and the distributor code. The terminal device may include software (or similar type of hardware) hereafter called a determining device that recognizes coded content files from non-coded content files. That is, the terminal device may determine whether the content file has been coded with an identification code or possibly also a distributor code. The terminal device may only allow the downloading and saving of the content file if there is a correct key code for the coded content files. The content file may also include a structure/mechanism that would deny its being saved (and thus used) except on equipment that includes structure (i.e., software or hardware) to recognize coded content files from non-coded content files. In other words, the content file could not be saved and used unless the terminal device could recognize the codes such as the identification code and the distributor code.

After an enduser has downloaded a content file with a proper key code, the enduser may use the content file in the terminal device. In order to allow the use of the file in other devices within the control of the authorized enduser, the terminal device may include software (or similar type of hardware) that recognizes the source (e. g., the port) through which the file is downloaded. If the port is a typical local connection (e. g., local wireline, infrared, Bluetooth), then no further key code would be required. However, if the enduser sends the content file through the network connection, then the software (or similar type of hardware) of the recipient's terminal device would require a new key code that is a combination of: (a) the identification code of the content file; and (b) the distributor code (i.e., the enduser sending the content file). In other words, in order to send a secured content file, one would need to acquire a new code and the recipient would need to acquire a new key code from the same source.

In order to avoid an enduser from copying someone's key code, a mechanism (e. g., additional bits) may be provided in the original content file that allow the content file to be distributed only once (or any limited number of times) using exactly the same codes. The content file may contain a mechanism that prevents one from making copies from a file that has been copied from the original content file.

Encrypting or water marking of the identification code, the distributor code and the key code may also be provided for additional security. The encrypting and/or water marking may be performed by any well known methods. This makes the copying, decombination, reverse engineering or disassembly of the identification code, the distributor code and/or the key code difficult or impossible.

The use of the content file in terminal devices other than the device into which the file is first loaded can be arranged through various methods such by defining certain sources from which a content file can be downloaded without the key code. Such sources can be, for example, certain drives to the computer or wire line connections into a wireless device. The number of authorized copies may also be limited or the number of copies that may be made from a copy of a content file may be limited.

## Claims

1. Method comprising:
receiving an assigned identification code for a content file at a terminal device;
receiving an assigned distributor code for said content file at said terminal device;
receiving a key code at said terminal device; and
comparing said key code with a combination of said identification code and said distributor code at said terminal device to determine whether said terminal device is authorized to use said content file, and determining whether said content file has been forwarded from said terminal device to another terminal device.

2. Method of claim 1, wherein the other terminal device enables use of said content file without said key code when said content file is forwarded from one of a defined source and a wire connection of said terminal device.

3. Method of claim 1 or claim 2, wherein the other terminal device is denied use of said content file without said key code when said content file is forwarded from an entity other than one of a defined source and a wire connection of said terminal device.

4. Apparatus, comprising:
a connection device configured to receive data from an authorized distributor;
a memory device configured to receive an identification code, a distributor code identifying the authorized distributor and a key code that corresponds to a combination of said identification code and said distributor code, said key code being received at said terminal device after being forwarded by an entity other than a distributor of a content file;
a comparing device configured to compare said combination of said identification code and said distributor code with said key code to determine whether said terminal device is authorized to use said content file; and
a determining device configured to determine whether said content file has been forwarded from said terminal device to another terminal device.

5. System, comprising:
a terminal device for authorizing use of a content file distributed by an authorized distributor,
a connection device configured to transfer data to said terminal device from the authorized distributor;
a memory device configured to receive an identification code, a distributor code identifying the authorized distributor and a key code that corresponds to a combination of said identification code and said distributor code, said key code being received at said terminal device after being forwarded by an entity other than a distributor of said content file;
a comparing device configured to compare said combination of said identification code and said distributor code with said key code to determine whether said terminal device is authorized to use said content file;
a determining device configured to determine whether said content file has been forwarded from said terminal device to another terminal device, said determining device enabling use of said content file without said key code when said content file is forwarded from one of a defined source and a wire connection of said terminal device.

6. Method, comprising:
receiving an identification code for a content file;
receiving a distributor code associated with said content file;
receiving a key code; and
comparing said key code with a combination of said in deification code and said distributor code to determine whether a terminal device is authorized to use said content file.

7. Method of claim 6, further comprising determining whether said content file has been forwarded from said terminal device to another terminal device.

8. Method of claim 4, further comprising enabling use of said content file without said key code when said content file is forwarded from one of a defined source and a wire connection of said terminal device.
